# EUROPÄISCHE PATENTSCHRIFT

(11) **EP 2 819 322 B1**
(45) Veröffentlichungstag und Bekanntmachung des Hinweises auf die Patenterteilung: **04.04.2018**
(21) Anmeldenummer: 13075046.6
(22) Anmeldetag: 28.06.2013
(51) Int. Cl.: H04B 10/077

(54) **Automatisierte Fehlerreaktion bei einem optischen Übertragungssystem**
Automated error response for an optical transmission system
Réaction d'erreur automatisée dans un système de transmission optique

(43) Veröffentlichungstag der Anmeldung: 31.12.2014
(73) Patentinhaber: Deutsche Telekom AG, 53113 Bonn (DE)
(72) Erfinder: Geilhardt, Frank, 16341 Panketal (DE); Breuer, Dirk, 16727 Oberkrämer OT Bötzow (DE); Weis, Erik, 14612 Falkensee (DE)
(74) Vertreter: Nern, Peter-Michael

(56) Entgegenhaltungen:
- EP-A2- 2 403 269
- DE-A1- 4 317 863
- DE-A1- 10 046 104
- GB-A- 2 348 063
- US-A1- 2005 185 957

## Beschreibung

Die Erfindung betrifft eine Lösung zur automatisierten Reaktion auf einen in einem optischen Übertragungssystem auftretenden Fehler, nämlich auf eine Unterbrechung eines Lichtwellenleiters in einem entsprechend überwachten Übertragungsabschnitt des Systems. Sie bezieht sich hierbei auf ein entsprechendes Verfahren und ein zur Durchführung des Verfahrens ausgebildetes optisches Übertragungssystem für ein Zugangsnetz zu einem Weitverkehrsnetz.

Bei optischen Übertragungssystemen, wie sie für die digitale Datenübertragung verwendet werden, kommt zumindest im Zusammenhang mit der Datenübertragung über größere Distanzen hinweg im Allgemeinen Laserstrahlung zum Einsatz. Die Laserstrahlung, das heißt durch eine stimulierte Emission verstärktes Licht, wird dabei von einem entsprechenden Sender in einen Lichtwellenleiter eingekoppelt und am anderen Ende der Übertragungsstrecke durch einen dazu geeigneten Empfänger empfangen. Die Nutzung von Laserstrahlung bedingt jedoch die Beachtung besonderer Sicherheitserfordernisse, da die sehr energiereiche Strahlung bei unsachgemäßer Anwendung oder im Fehlerfall zu Personen- oder Sachschäden, wie beispielsweise zu Augenschäden oder zum Entstehen von Bränden, führen kann.

Unter anderem wurden daher so genannte Laserschutzklassen definiert, welche die für technische Zwecke eingesetzte Laserstrahlung insbesondere im Hinblick auf deren Gefährlichkeit für das menschliche Auge charakterisieren. Entsprechend dieser Einteilung und der demgemäß einer Laserquelle oder einem mittels Laserstrahlung übertragenen Signal zuzuordnenden Sicherheitsklasse sind unterschiedliche Sicherheitsmaßnahmen und bauliche Schutzmaßnahmen einzuhalten, um eine Gefährdung für Menschen sowie eine Beschädigung von Objekten und Einrichtungen weitgehend auszuschließen.

Für optische Übertragungssysteme kommt überwiegend Laserstrahlung der Schutzklasse 1M zum Einsatz. Es handelt sich hierbei um Laserstrahlung, welche für den Menschen im Grunde ungefährlich ist, so lange sie nicht über verstärkend wirkende optische Elemente, wie Lupen, Ferngläser oder dergleichen, geführt wird. Die Ungefährlichkeit für den Menschen wird dabei dadurch gewährleistet, dass die Leistung der von einer Laserstrahlungsquelle abgegebenen Strahlung entsprechend gering gehalten wird. Dies bringt jedoch den Nachteil mit sich, dass das technische Potenzial der Laserstrahlung, welche aufgrund ihrer physikalischen Eigenschaften bei entsprechender Leistung eine Übertragung über sehr große Distanzen ermöglicht, nicht ausgeschöpft wird.

Optische Übertragungssysteme, nämlich insbesondere Passive Optische Netzwerke (PON), werden beispielsweise im Zugangsnetzbereich für den Zugang zu Weitverkehrsnetzen eingesetzt. Hier eignen sie sich insbesondere für den Einsatz auf der so genannten letzten Meile, da mit ihrer Hilfe größere Distanzen ohne zusätzliche Zwischenverstärkung überbrückt werden können, als dies bei der Verwendung herkömmlicher leitungsgebundener elektrischer Übertragungseinrichtungen der Fall ist. Ein optisches Zugangsnetz wird mit Hilfe eines OLT, nämlich einer Optical Line Termination, an das Weitverkehrsnetz angebunden (im Weiteren in der Einzahl als der OLT, in der Mehrzahl als die OLT bezeichnet). Entsprechend dem Namen schließt dabei der OLT das Weitverkehrsnetz aus netzseitiger Sicht ab beziehungsweise terminiert dieses. Ausgehend vom OLT werden Daten in der Downstreamrichtung, also zu den Nutzern beziehungsweise Teilnehmern hin, über einen Lichtwellenleiter, die so genannte PON-Zuleitung, für mehrere Teilnehmer gemeinsam bis zu einem optischen Leistungskoppler oder zu einem Multiplexer/Demultiplexer übertragen. Bezogen auf die Übertragung in der Downstreamrichtung erfolgt dann an dem Leistungsteiler oder dem Multiplexer/Demultiplexer eine Aufteilung des die Daten enthaltenden optischen Signals auf die jeweiligen bezüglich der Daten bestimmungsgemäßen Nutzer beziehungsweise Teilnehmer. Die für die einzelnen Nutzer bestimmten Daten, also das entsprechende optische Signale, auf welches die Daten aufmoduliert sind, läuft dann an einem ONT (im Weiteren in der Einzahl als der ONT, in der Mehrzahl als die ONT bezeichnet), nämlich einem Optical Network Terminal, des jeweiligen Nutzeranschlusses auf, welcher das Netzwerk aus nutzerseitiger Sicht terminiert. Dadurch, dass der Übertragungsabschnitt mit der vorgenannten PON-Zuleitung durch den Sender eines OLT bis zu der am Ende dieses Übertragungsabschnitts in dem Leistungskoppler oder dem Multiplexer/Demultiplexer erfolgenden Signalaufteilung für die gemeinsame Übertragung von für eine Mehrzahl von ONT bestimmter Signale genutzt wird, besteht das Problem, dass entweder nur eine kleinere Zahl von über einen ONT an die Übertragungsstrecke angekoppelten Endgeräten von Nutzern beziehungsweise Teilnehmern über die PON-Zuleitung versorgt werden kann oder aber die mittels des Übertragungsabschnitts mit der PON-Zuleitung überbrückbare Entfernung vergleichsweise gering sein muss, wenn sichergestellt werden soll, dass die optische Gesamtleistung des durch Überlagerung einzelner optischer Teilsignale mit gegebenenfalls unterschiedlicher Wellenlänge gebildeten und über den Übertragungsabschnitt übertragenen Signals den für die Spezifikation der Leistungsschutzklasse 1 M vorgegebenen Leistungswert nicht übersteigt. Dies läuft aber der Intention zuwider, optische Übertragungssysteme eben genau zu dem Zweck einer Übertragung über möglichst große Distanzen hinweg zu nutzen.

Zudem ist es ein Bestreben der Netzbetreiber, die Zugangsnetze so auszulegen, dass sie eine Systemaufrüstung ermöglichen, um zum Beispiel gestiegene Anforderungen an die Datenrate bedienen zu können. Durch eine entsprechende Ausbildung sollen die Zugangsnetze dabei einen so genannten "sanften" Migrationspfad unterstützen, welcher einen bedarfsorientierten Systemwechsel für einzelne Endkunden, das heißt Nutzer von Telekommunikationsanschlüssen, erlaubt. Ein solcher Migrationspfad wird durch die Koexistenz mehrerer Systemgenerationen auf derselben Lichtwellenleiter-Infrastruktur ermöglicht. Dabei wird durch die einzelnen Systemgenerationen Laserlicht unterschiedlicher Wellenlängenbereiche genutzt, welches durch mehrere OLT über einen zusätzlichen WDM-Filter (WDM = Wavelength Devision Multiplexing, das heißt Wellenlängenmultiplexverfahren) unter Ausbildung eines Gesamtsignals in die PON-Zuleitung eines gemeinsam genutzten Teilabschnitts des an einem Ende durch einen jeweiligen OLT und an dem anderen Ende durch eine das Signal auf die ONT aufteilende Kopplungseinrichtung begrenzten Übertragungsabschnitts eingekoppelt wird. Dies kann aber dazu führen, dass insbesondere die über den gemeinsam genutzten Teilabschnitt der PON-Zuleitung übertragene Lichtleistung die für die Schutzklasse 1M definierte Leistung deutlich überschreitet. Andererseits resultiert hieraus im Falle eines Bruchs der PON-Zuleitung, beispielsweise infolge des ungewollten Durchtrennens des Lichtwellenleiters bei Bauarbeiten, ein unzulässig hohes Risiko, dass durch die austretende Laserstrahlung Personen zu Schaden kommen oder ein Sachschaden entsteht.

Durch die EP 2 403 269 A2 wird ein Verfahren beschrieben, mittels welchem ein Fehler, wie insbesondere der Bruch eines Lichtwellenleiters, in einem Netzwerk detektiert und lokalisiert werden kann. Gemäß der beschriebenen Lösung wird dabei ein optisches Zugangsnetz auf das Vorliegen entsprechender Fehler überwacht, wobei sich die Überwachung auf das gesamte Zugangsnetz bezieht. Dazu wird mittels eines Generators ein optisches Diagnosesignal in das Netzwerk eingespeist und mittels einer an oder in dem OLT angeordneten Verarbeitungseinheit die Anwesenheit oder die Abwesenheit von Antwortsignalen den einzelnen ONT zugeordneter passiver Einheiten ausgewertet. Hierbei ist teilnehmerseitig jedem einzelnen ONT eine solche als "Passive Correlator" bezeichnete passive Einheit zugeordnet, wodurch es zwar ermöglicht ist, eine eventuelle Fehlerstelle, zum Beispiel einen Leitungsbruch, in dem Netzwerk zu lokalisieren, was jedoch einen vergleichsweise hohen Aufwand bedingt. Bei einem nach einem ähnlichen Prinzip arbeitenden, in der DE 43 17 863 A1 beschriebenen System zur Überwachung des Wiederanschaltens einer Lichtwellenleiter-Übertragungsstrecke in einem Weitverkehrsnetz ist es darüber hinaus vorgesehen, den Pegel dazu verwendeter optischer Prüfimpulse auf ein ungefährliches Niveau abzusenken. Auch hier erfolgt eine Überwachung des gesamten Netzwerks. Ein weiteres automatisches Überwachungsverfahren nach dem Stand der Technik ist aus der DE-A-10046104 bekannt.

Aufgabe der Erfindung ist es eine alternative Lösung für optische Zugangsnetze bereitzustellen, welche einen einfachen und somit kostensparenden Aufbau eines Überwachungssystems ermöglicht, welches weniger darauf ausgelegt ist, eine möglichst schnelle Fehlerdiagnose und Fehlerbeseitigung zu ermöglichen, als unmittelbare Gefahren für Menschen und Sachwerte auszuschließen. Hierfür sind ein entsprechendes Verfahren und ein dessen Ausführung ermöglichendes System anzugeben.

Die Aufgabe wird durch ein Verfahren mit den Merkmalen des Hauptanspruchs gelöst. Ein die Aufgabe lösendes optisches Übertragungssystem ist durch die Merkmale des ersten Sachanspruchs charakterisiert. Vorteilhafte Aus- beziehungsweise Weiterbildungen der Erfindung sind durch die Unteransprüche gegeben.

Das zur Lösung der Aufgabe vorgeschlagene Verfahren zur automatisierten Fehlerreaktion bezieht sich auf ein optisches Übertragungssystem für ein Zugangsnetz zu einem Weitverkehrsnetz. Dieses Übertragungssystem besteht aus mindestens einem Sender, mindestens einem Empfänger und einer Übertragungsstrecke mit einem auf Fehler, nämlich auf Unterbrechungen eines Lichtwellenleiters zu überwachenden Übertragungsabschnitt. Dabei ist das vorgeschlagene Verfahren so gestaltet, dass im Falle einer Unterbrechung eines Lichtwellenleiters des vorgenannten Übertragungsabschnitts automatisiert die Leistung des über diesen Übertragungsabschnitt übertragenen optischen Signals zumindest reduziert wird. Bei der insoweit im Falle der Unterbrechung des Lichtwellenleiters reduzierten Leistung handelt es sich dabei um die Gesamtleistung aller von Sendern des Übertragungssystems ausgesendeten Signale, welche zumindest in einem Teilabschnitt des überwachten Übertragungsabschnitts gewissermaßen einen Summensignal mit einer für dieses Summensignal resultierenden Gesamtleistung bilden.

Erfindungsgemäß wird lediglich ein Abschnitt der Übertragungsstrecke überwacht, nämlich ein Übertragungsabschnitt, an dessen teilnehmerseitigen Ende eine mehrere ONT als teilnehmerseitige Netzabschlusseinrichtungen des Zugangsnetzes an den überwachten Übertragungsabschnitt ankoppelnde sowie mit einer Funktionseinheit ausgestattete Kopplungseinrichtung angeordnet ist. Dabei wird die Reduzierung der Strahlungsleistung in dem Lichtwellenleiter des überwachten Übertragungsabschnitts im Falle seiner Unterbrechung dadurch bewerkstelligt, dass durch mindestens einen Sender wiederholt ein Prüfsignal ausgesendet wird und dass durch mindestens eine Steuer- und Verarbeitungseinheit, mit der (vorzugsweise, aber nicht zwingend der auch das Prüfsignal aussendende) Sender ausgestattet ist, ein von der an dem empfängerseitigen beziehungsweise teilnehmerseitigen Ende des überwachten Übertragungsabschnitts angeordneten Funktionseinheit beim Empfang des Prüfsignals ausgesendetes Antwortsignal empfangen und ausgewertet wird. Bleibt dieses Antwortsignal aus, so wird hieraus auf eine Unterbrechung eines Wellenleiters geschlossen und die Gesamtleistung der über diesen Übertragungsabschnitt übertragenen optischen Signale durch das von der vorgenannten Steuer- und Verarbeitungseinheit veranlasste Abschalten mindestens eines Senders des Übertragungssystems reduziert.

Sowohl in Bezug auf die Beschaffenheit beziehungsweise Erzeugung des Prüfsignals einerseits als auch im Hinblick auf die Erzeugung des Antwortsignals andererseits sind unterschiedliche Möglichkeiten gegeben. Entsprechend einer bevorzugten Gestaltung des Verfahrens wird dabei das Antwortsignal unmittelbar aus dem Prüfsignal gewonnen, indem dieses mit seiner gesamten Leistung oder einem Teil seiner Leistung von der zuvor genannten, am teilnehmerseitigen Ende des überwachten Übertragungsabschnitts angeordneten sowie entsprechend ausgebildeten Funktionseinheit reflektiert wird. Die Erzeugung des Antwortsignals erfolgt demnach bei dieser Art der Verfahrensgestaltung gewissermaßen auf passivem Wege, da das Prüfsignal lediglich teilweise oder vollständig am empfängerseitigen beziehungsweise teilnehmerseitigen Ende des auf das Vorliegen einer Unterbrechung überwachten Übertragungsabschnitts, reflektiert wird. Denkbar wäre aber auch die Anordnung einer aktiven Funktionseinheit am empfängerseitigen beziehungsweise teilnehmerseitigen Ende des überwachten Übertragungsabschnitts. Durch eine solche aktive Funktionseinheit wird das empfangene Prüfsignal in geeigneter Weise manipuliert beziehungsweise verändert und als Antwortsignal an die schon mehrfach erwähnte, einem Sender zugeordnete Steuer- und Verarbeitungseinheit zurückgesendet. Vorzugsweise handelt es sich bei der Steuer.- und Verarbeitungseinheit, um eine Einheit, welche dem das Prüfsignal aussendenden Sender zugeordnet ist und diesen auch zur zyklischen Aussendung des Prüfsignals veranlasst. Als Reaktion auf den Eingang des Prüfsignals kann aber auch durch entsprechende Elemente einer solchen aktiven Funktionseinheit ein völlig neues Signal generiert und als Antwortsignal zurückgesendet werden.

Eine entsprechende, am teilnehmerseitigen Ende des überwachten Übertragungsabschnitts angesiedelte aktive Funktionseinheit kann beispielsweise im Rahmen einer Zusatzfunktion eines gemanagten Zwischenverstärkers für die übertragenen Signale ausgebildet sein. Sie verfügt dabei über einen optischen Empfänger zum Empfang des Prüfsignals und eine Verarbeitungseinheit zur Verarbeitung des Prüfsignals sowie zur Generierung des erfindungsgemäß vorgesehenen, senderseitig auszuwertenden Antwortsignals. Im Falle einer aktiven Ausbildung der am empfängerseitigen beziehungsweise teilnehmerseitigen Ende des überwachten Übertragungsabschnitts angeordneten Funktionseinheit kann das Prüfsignal beispielsweise Bestandteil von Steuersignalen sein die von dem mindestens einen Sender des Übertragungssystems zur Steuerung empfängerseitig angeordneter Einheiten oder Einrichtungen, wie beispielsweise eines ONT in einem optischen Zugangsnetz zu einem Weitverkehrsnetz, ausgesendet werden.

Im Hinblick auf einen einfachen Aufbau eines nach dem erfindungsgemäßen Verfahren arbeitenden beziehungsweise eines zur Durchführung des Verfahrens ausgebildeten optischen Übertragungssystems ist jedoch der passiven Variante der am empfängerseitigen beziehungsweise teilnehmerseitigen Ende des überwachten Übertragungsabschnitts angeordneten Funktionseinheit sicherlich der Vorzug zu geben. Eine Gestaltung des Verfahrens und demgemäß auch des entsprechenden optischen Übertragungssystems entsprechend der aktiven Variante kommt insbesondere für spezielle Anwendungsfälle in Betracht, bei denen gegebenenfalls mit dem Antwortsignal zusätzliche Informationen übertragen werden sollen.

Bei der Erzeugung des Prüfsignals besteht eine mögliche Verfahrensgestaltung darin, dass als Prüfsignal unmittelbar ein von dem mindestens einen Sender zur Übertragung von Nutzdaten an den mindestens einen Empfänger ausgesendetes Signal verwendet wird. Hierbei wird in der an dem teilnehmerseitigen Ende des überwachten Übertragungsabschnitts angeordneten Funktionseinheit ein Teil der Leistung des die Nutzdaten tragenden Signals ausgekoppelt und dieser Leistungsteil von der Funktionseinheit reflektiert. Dies meint, dass im Grunde das die Nutzdaten tragende Signal selbst als Prüfsignal dient und das Antwortsignal einem Leistungsanteil dieses Signals entspricht. Im Falle des Vorhandenseins mehrerer Sender wird demgemäß ein Leistungsanteil des aus den Signalen der einzelnen Sender mit den Nutzdaten gebildeten, über den überwachten Übertragungsabschnitt übertragenen Signalgemisches beziehungsweise Summensignals als Antwortsignal an einen Empfänger einer wenigstens einem Sender zugeordneten Steuer- und Verarbeitungseinheit zurück reflektiert.

Das die Aufgabe lösende und zur Durchführung des zuvor erläuterten Verfahrens ausgebildete optische Übertragungssystem ist als ein optisches Übertragungssystem in einem Zugangsnetz zu einem Weitverkehrsnetz ausgebildet. Hierbei weist das entsprechende optische Übertragungssystem mindestens eine mit wenigstens einem optischen Sender ausgestattete Abschlusseinrichtung auf, welche als OLT, also als Optical Line Termination, das Zugangsnetz netzseitig abschließt und an das Weitverkehrsnetz anbindet. Das Übertragungssystem weist ferner mehrere, mit wenigstens einem optischen Empfänger ausgestattete Abschlusseinrichtungen auf, welche als ONT, nämlich als Optical Network Terminal, das Zugangsnetz aus teilnehmerseitiger Sicht abschließen. Bestandteil des Übertragungssystems ist ferner eine optische Übertragungsstrecke, welche einen auf eine Unterbrechung eines Lichtwellenleiters überwachten Übertragungsabschnitt aufweist. Dabei ist an dem teilnehmerseitigen Ende des überwachten Übertragungsabschnitts eine die vorgenannten ONT, also die teilnehmerseitigen Abschlusseinrichtungen, an diesen Übertragungsabschnitt ankoppelnde optische Kopplungseinrichtung angeordnet. Bei Letzterer handelt es sich um einen optischen Leistungskoppler oder um einen Multiplexer/Demultiplexer, welcher vorzugsweise nach dem WDM-Verfahren (Wavelength Devision Multiplexing Verfahren), also dem Wellenlängenmultiplexverfahren, arbeitet.

Im Hinblick darauf, dass der über das mit dem erfindungsgemäßen Übertragungssystem ausgestattete Zugangsnetz und zum oder über das Weitverkehrsnetz erfolgende Datenaustausch in der Praxis im Grunde stets bidirektionaler Art ist, also in beide Richtungen erfolgt, verfügen vorzugsweise auch bei dem erfindungsgemäßen Übertragungssystem sowohl der OLT oder die OLT über einen Empfänger als auch die ONT jeweils über einen optischen Sender. In den Ansprüchen und im Zusammenhang mit den schon gegebenen sowie den nachfolgenden Erläuterungen zur Erfindung soll jedoch das Übertragungssystem vereinfachend jeweils aus netzseitiger Sicht ausschließlich in der Downstream-Richtung betrachtet werden, für welche insbesondere der mindestens eine Sender in dem OLT und der jeweils mindestens eine Empfänger in den ONT von Bedeutung sind.

Entsprechend dem zum Verfahren dargestellten Grundprinzip der erfindungsgemäßen Lösung ist die vorgenannte, am empfängerseitigen beziehungsweise teilnehmerseitigen Ende des überwachten Übertragungsabschnitts angeordnete Kopplungseinrichtung mit einer Funktionseinheit ausgestattet, welche zu einem von einem Sender des OLT empfangenen Prüfsignal ein Antwortsignal an einen OLT, vorzugsweise an den das Prüfsignal aussendenden OLT, überträgt. Der das Antwortsignal empfangende OLT ist dabei mit einer Steuer- und Verarbeitungseinheit ausgestattet, durch welche das Antwortsignal der Funktionseinheit der Kopplungseinrichtung empfangen (mittels eines mit der Steuer- und Verarbeitungseinheit verbundenen Empfängers) und ausgewertet wird. Diese Steuer- und Verarbeitungseinheit ist derart ausgebildet, dass durch sie im Falle des Ausbleibens des Antwortsignals die Leistung des über den überwachten Übertragungsabschnitt übertragenen optischen Signals durch Abschalten mindestens eines Senders des Übertragungssystems reduziert wird. Bei dem mindestens einen, dem Empfang des Antwortsignals dienenden optischen Empfänger (der Steuer- und Verarbeitungseinheit) kann es sich um einen dem betreffenden OLT im Hinblick auf die bidirektionale Übertragung ohnehin zugeordneten, dem Empfang von upstream (also zum Weitverkehrsnetz hin) übertragenen Daten dienen Empfänger oder aber - vorzugsweise - um einen speziell zum Empfang des Antwortsignals zum Prüfsignal vorgesehenen Empfänger handeln.

Bei der Funktionseinheit der am empfängerseitigen beziehungsweise teilnehmerseitigen Ende des überwachten Übertragungsabschnitts angeordneten Kopplungseinrichtung handelt es sich gemäß einer möglichen Ausbildungsform des erfindungsgemäßen Übertragungssystems um eine passive Funktionseinheit. Durch diese wird das Prüfsignal lediglich mit seiner gesamten Leistung oder einem Teil seiner Leistung reflektiert. Wie bereits zum Verfahren ausgeführt, kommt jedoch auch eine aktive Ausbildung dieser Funktionseinheit in Betracht. In diesem Falle umfasst diese Funktionseinheit Baugruppen, durch welche das Prüfsignal ausgewertet und in geeigneter Weise manipuliert oder aber beim Empfang des Prüfsignals ein davon bezüglich seiner Beschaffenheit unabhängiges Antwortsignal generiert und mittels eines in diesem Falle zur Funktionseinheit gehörenden Senders an mindestens einen das Antwortsignal mittels der ihm zugeordneten Steuer- und Verarbeitungseinheit auswertenden OLT ausgesendet wird.

Im Falle der bevorzugten passiven Ausbildung der Funktionseinheit ist diese entsprechend einer möglichen Ausbildungsform zur Auskopplung eines Teils der Leistung eines über die Kopplungseinrichtung vom Sender eines OLT zu einem Empfänger eines ONT übertragenen Signals mit Nutzdaten ausgebildet. Auch bezüglich der netzseitigen Systeme, also der zur Anbindung des Zugangsnetzes an das Weitverkehrsnetz dienenden OLT, kommen im Hinblick auf die Erzeugung des Prüfsignals und die Auswertung des Antwortsignals unterschiedliche Möglichkeiten in Betracht.

Gemäß einer praxisrelevanten Ausgestaltung verfügt das erfindungsgemäße optische Übertragungssystem über mehrere OLT. Hierbei können einzelne OLT oder jeder dieser OLT mit einer die Aussendung eines Prüfsignals durch seinen Sender veranlassenden und das Antwortsignal auswertenden Steuer- und Verarbeitungseinheit sowie mit einem Empfänger für den Empfang des Antwortsignals (bei welchem es sich allerdings auch um einen auch die von den ONT ausgesendeten Nutzsignale empfangenden Empfänger handeln kann) ausgestattet sein. An dieser Stelle sei darauf hingewiesen, dass das Antwortsignal zum Prüfsignal nicht unbedingt durch den auch das Prüfsignal aussendenden OLT beziehungsweise eine diesem zugeordnete Steuer- und Verarbeitungseinheit ausgewertet werden muss, sondern dessen Auswertung auch durch eine einem anderen OLT zugeordnet Steuer- und Verarbeitungseinheit erfolgen kann. Je nach Konfiguration können einzelne oder alle OLT mit einer das Aussenden von Prüfsignalen veranlassenden Steuer- und Verarbeitungseinheit und/oder mit einer, gegebenenfalls mit der vorgenannten auch identischen Steuer- und Verarbeitungseinheit zur Auswertung des Antwortsignals ausgestattet sein.

Gemäß einer möglichen Weiterbildung kann aber auch ein mit einer entsprechenden Steuer- und Verarbeitungseinheit ausgestatteter OLT als Master arbeiten. In diesem Falle werden durch den als Master fungierenden OLT dessen eigener Sender sowie die Sender der anderen OLT in Abhängigkeit gegebenenfalls in dem überwachten Übertragungsabschnitt festgestellter Fehler, also Unterbrechungen, angesteuert werden. Die Ansteuerung ist dabei derart, dass aufgrund einer entsprechenden Konfiguration des Übertragungssystems vorzugsweise zunächst Systeme, also die Sender von OLT, welche Signale mit, im Hinblick auf eine geforderte Ausfallsicherheit, niedriger Priorität aussenden, abgeschaltet werden, um die Gesamtleistung in dem überwachten Übertragungsabschnitt zu reduzieren. Auf diese Weise ist es möglich, gegebenenfalls hochpriorisierte beziehungsweise hochperformante Systeme in Betrieb zu halten, jedoch gleichzeitig die Gesamtleistung in dem überwachten Übertragungsabschnitt, insbesondere in dessen gemeinsam genutzten Teilabschnitt, unter ein gemäß der Sicherheitsklassifikation 1 M kritisches Maß zu reduzieren.

Nachfolgend sollen anhand von Zeichnungen Ausführungsbeispiele und Erläuterungen zu einigen Aspekten der Erfindung gegeben werden. Die Zeichnungen zeigen im Einzelnen:
- Fig. 1:: eine grundsätzliche Ausbildungsform eines optischen Übertragungssystems für ein Zugangsnetz zu einem Weitverkehrsnetz,
- Fig. 2:: eine praxisrelevante Ausbildungsform eines Zugangsnetzes auf der Grundlage des optischen Übertragungssystems gemäß Fig. 1.

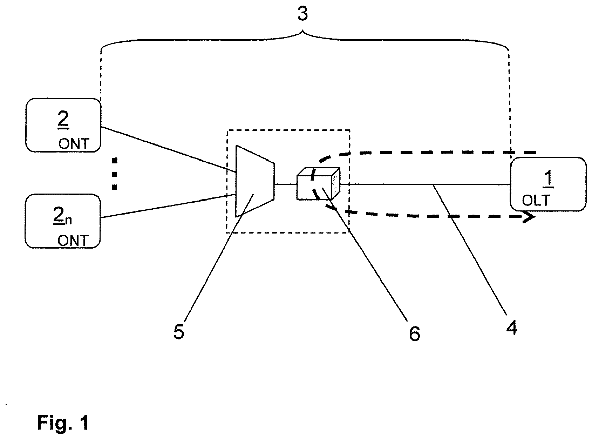

Die Fig. 1 zeigt eine grundsätzliche Ausbildungsform eines zur Realisierung eines Zugangsnetzes zu einem Weitverkehrsnetz (in Fig. 1 nicht gezeigt) vorgesehenen optischen Übertragungssystems entsprechend der erfindungsgemäßen Lösung. Das optische Übertragungssystem besteht demgemäß im Wesentlichen aus einem (nicht einzeln dargestellten) optischen Sender als Teil eines OLT 1, mehreren als Bestandteil eines ONT 2, 2₁,....2ₙ ausgebildeten (ebenfalls nicht als Einzelheit gezeigten) optischen Empfängern und einer den Datenaustausch zwischen dem OLT 1 und den ONT 2, 2₁,....2ₙ ermöglichenden Übertragungsstrecke 3. Bei dem OLT 1, der Optical Line Termination, handelt es sich um eine das Zugangsnetz aus netzseitiger Sicht abschließende Anschlusseinrichtung, über welche das Zugangsnetz an ein (wie gesagt, hier nicht gezeigtes) Weitverkehrsnetz angebunden ist. Die ONT 2, 2₁,....2ₙ, nämlich die Optical Network Terminals, schließen das Zugangsnetz teilnehmerseitig ab. Die optische Übertragungsstrecke 3 wird gebildet durch eine PON-Zuleitung (PON = Passiv Optical Network), einer an dem teilnehmerseitigen Ende der PON-Zuleitung, als dem überwachten Übertragungsabschnitt 4, angeordneten optischen Kopplungseinrichtung 5 und diese Kopplungseinrichtung 5 mit den ONT 2, 2₁,....2ₙ verbindenden Teilnehmerleitungen, wobei der Kopplungseinrichtung 5 die erfindungsgemäß vorgesehene Funktionseinheit 6 zugeordnet ist. Soweit es sich bei der Kopplungseinrichtung 5 um einen Multiplexer/Demultiplexer, handelt, arbeitet dieser nach dem Prinzip des WDM.

Im Zusammenhang mit dem gezeigten Ausführungsbeispiel wird davon ausgegangen, dass ein optisches, von dem Sender des OLT 1 ausgesendetes Signal mit über das Weitverkehrsnetz zu an Teilnehmeranschlüssen betriebenen Endgeräten (hier ebenfalls nicht dargestellt) und somit zu den ONT 2, 2₁,...2ₙ übertragenen Nutzdaten eine Leistung aufweist, welche deutlich höher ist als die der Laserschutzklasse 1M zugrunde liegende Strahlungsleistung. Um Personen- oder Sachschäden im Falle eines Bruchs der PON-Zuleitung, also eines Lichtwellenleiters in dem überwachten Übertragungsabschnitt 4, zu verhindern, arbeitet das in der Fig. 1 dargestellte optische Übertragungssystem, durch welches das Zugangsnetz ausgebildet ist, nach dem erfindungsgemäßen Verfahren. Hierzu ist der Kopplungseinrichtung 5, also dem am teilnehmerseitigen Ende der PON-Zuleitung beziehungsweise des überwachten Übertragungsabschnitts 4 angeordneten passiven optischen Leistungsteilers oder Multiplexer/Demultiplexer, die gemäß der Erfindung vorgesehene Funktionseinheit 6 zugeordnet. Die betreffende Funktionseinheit 6 kann dabei gegebenenfalls auch als unmittelbarer integraler Bestandteil der Kopplungseinrichtung 5 ausgebildet sein. Dabei sei angenommen, dass es sich bei der Funktionseinheit 6 vorliegend um eine passive Funktionseinheit 6 handelt, also um eine Einheit, welche selbst keine Energieversorgung benötigt. Es handelt sich hierbei beispielsweise um rein optische Komponenten, welche die Auskopplung eines Teils der Leistung des bei der Kopplungseinrichtung 5 und damit bei der ihr zugeordneten Funktionseinheit 6 eintreffenden optischen Signals und eine Reflektion des ausgekoppelten Signalteils ermöglichen. Entsprechend der Erfindung wird durch die genannten Komponenten der Funktionseinheit 6 ein Teil (bezüglich der Leistung) eines Prüfsignals ausgekoppelt und reflektiert, was durch den mit einer gestrichelten Linie gezeichneten Pfeil versinnbildlicht wird. Vorzugsweise wird dabei das der Übertragung der Nutzdaten dienende, von dem Sender des OLT 1 ausgesendete optische Signal selbst als Prüfsignal verwendet. Der von diesem Prüfsignal ausgekoppelte Leistungsteil wird an den OLT 1 als Antwortsignal zurückübermittelt. Dieses Antwortsignal wird durch eine dem OLT 1 zugeordnete (ebenfalls nicht gezeigte) Steuer- und Verarbeitungseinheit ausgewertet, und zwar derart, dass diese im Falle des Ausbleibens des Antwortsignals unmittelbar die Leistung des über den überwachten Übertragungsabschnitt 4, also die PON-Zuleitung, übertragenen optischen Signals, das heißt die von dem mindestens einen Sender des OLT 1 abgestrahlte Leistung, reduziert.

Die Reduktion ist dabei derart, dass über die PON-Zuleitung allenfalls noch ein optisches Signal übertragen wird, dessen Leistung die in der Leistungsschutzklasse 1M spezifizierte Leistung nicht überschreitet. Hierdurch werden Personen- und Sachschäden vermieden.

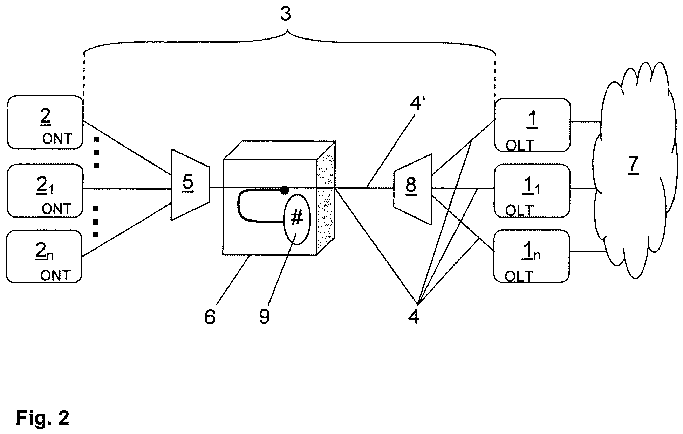

Die Fig. 2 betrifft eine praxisrelevante Ausbildungsform eines unter Verwendung eines optischen Übertragungssystems gemäß der Fig. 1 realisierten Zugangsnetzes für ein Weitverkehrsnetz 7. Der Aufbau des entsprechenden Zugangsnetzes entspricht dem zur Fig. 1 erläuterten. Allerdings sind hier abweichend davon netzseitig mehrere OLT 1, 1₁,...1ₙ angeordnet. Die von den Sendern der OLT 1, 1₁,...1ₙ ausgehenden optischen Signale werden über ein WDM-Filter 8 in einen gemeinsam genutzten Teilabschnitt 4' des überwachten Übertragungsabschnitts 4 eingekoppelt. Aufgrund des Vorhandenseins mehrerer OLT 1, 1₁,...1ₙ und demgemäß mehrerer Sender kann dabei die im praktischen Einsatzfall über die PON-Zuleitung übertragene optische Leistung die in der Leistungsschutzklasse 1M spezifizierte Leistung deutlich überschreiten. Dennoch ist durch die erfindungsgemäße Ausbildung des optischen Übertragungssystems mit der der teilnehmerseitig vorgesehenen Kopplungseinrichtung 5 zugeordneten, mit einem (nicht im Detail gezeigten) Teilleistungsteiler und einem optischen Spiegel 9 ausgestatteten Funktionseinheit 6 sichergestellt, dass im Falle eines Bruchs des Lichtwellenleiters keine Schäden entstehen. Aufgrund der im Allgemeinen hohen, über die PON-Zuleitung (den überwachten Übertragungsabschnitt 4) übertragenen Leistung ist es dabei ausreichend, nur einen geringen Bruchteil dieser Leistung mittels der Funktionseinheit 6 auszukoppeln und als Antwortsignal zu dem auch hier durch das Nutzsignal ausgebildeten Prüfsignal an einen der OLT 1, 1₁,...1ₙ, welchem hierfür eine Steuer- und Verarbeitungseinheit zugeordnet ist, zurück zu reflektieren. Trotzdem das Antwortsignal nur eine Leistung aufweist, welche einem Bruchteil der Leistung des Signals mit den Nutzdaten (= Prüfsignal) entspricht, kann auch dieses Antwortsignal ohne weiteres über größere Distanzen hinweg übertragen werden. Der OLT 1, an welchen das Antwortsignal übermittelt wird, fungiert hierbei als Mastersystem. Wird nun durch die dem OLT 1 zugeordnete Steuer- und Verarbeitungseinheit ein Ausbleiben des Antwortsignals festgestellt, so wird die insgesamt von den Sendern aller OLT 1, 1₁,...1ₙ in die PON-Zuleitung eingekoppelte Strahlungsleistung so weit reduziert, dass sie sich in den Grenzen der Spezifikation der Leistungsklasse 1M bewegt. Dies geschieht, indem durch den Master, also den entsprechenden OLT 1 beziehungsweise dessen Steuer- und Verarbeitungseinheit, einzelne Sender der OLT 1, 1₁,...1ₙ abgeschaltet werden. Die Abschaltung erfolgt dabei aufgrund entsprechender Konfiguration des Systems vorzugsweise so, dass zunächst weniger kritische Systeme mit, beispielsweise im Hinblick auf die geforderte Ausfallsicherheit, niedriger Priorität und erst dann, nur soweit dies erforderlich ist, auch Systeme mit höherer Priorität abgeschaltet werden.

## Patentansprüche

1. Verfahren zur automatisierten Reaktion auf einen Fehler in einem aus mindestens einem Sender, mindestens einem Empfänger und einer Übertragungsstrecke (3) bestehenden optischen Übertragungssystem für ein Zugangsnetz zu einem Weitverkehrsnetz (7), nach welchem im Falle einer Unterbrechung eines Lichtwellenleiters in einem überwachten Übertragungsabschnitt (4) der Übertragungsstrecke (3) automatisiert die Leistung des über den überwachten Übertragungsabschnitt (4) übertragenen optischen Signals zumindest reduziert wird, **dadurch gekennzeichnet, dass** die Übertragungsstrecke (3) überwacht wird in einem Übertragungsabschnitt (4), an dessen teilnehmerseitigen Ende eine mehrere ONT (2, 2₁,....2ₙ) als teilnehmerseitige Netzabschlusseinrichtungen des Zugangsnetzes an den Übertragungsabschnitt (4) ankoppelnde und mit einer Funktionseinheit (6) ausgestattete Kopplungseinrichtung (5) angeordnet ist, indem durch mindestens einen Sender eines Leitungsabschlussgerätes, welches als OLT (1), nämlich Optical Line Termination, das Zugangsnetz netzseitig abschließt und an das Weitverkehrsnetz (7) anbindet, wiederholt ein Prüfungssignal ausgesendet wird und indem durch eine mit einem Empfänger ausgestattete Steuer- und Verarbeitungseinheit eines OLT (1) ein von der Funktionseinheit (6) der Kopplungseinrichtung (5) beim Empfang des Prüfsignals ausgesendetes Antwortsignal empfangen und ausgewertet sowie im Falle des Ausbleibens des Antwortsignals die Leistung des über den Übertragungsabschnitt (4) übertragenen optischen Signals durch Abschalten mindestens eines Senders des Übertragungssystems reduziert wird.

2. Verfahren nach Anspruch 1, **dadurch gekennzeichnet, dass** das Antwortsignal aus dem Prüfsignal gewonnen wird, indem das Prüfsignal mit seiner gesamten Leistung oder einem Teil seiner Leistung von der Funktionseinheit (6) der an dem teilnehmerseitigen Ende des Übertragungsabschnitts (4) angeordneten Kopplungseinrichtung (5) reflektiert wird.

3. Verfahren nach Anspruch 2, **dadurch gekennzeichnet, dass** als Prüfsignal ein von dem mindestens einen Sender zur Übertragung von Nutzdaten an den mindestens einen Empfänger ausgesendetes Signal verwendet wird, indem in der an dem teilnehmerseitigen Ende des Übertragungsabschnitts (4) angeordneten Funktionseinheit (6) ein Teil der Leistung des die Nutzdaten tragenden Signals ausgekoppelt und dieser Leistungsteil von der Funktionseinheit (6) reflektiert wird.

4. Verfahren nach Anspruch 1, **dadurch gekennzeichnet, dass** das Prüfsignal durch einen Empfänger einer aktiv ausgebildeten Funktionseinheit (6) empfangen und durch eine zu der Funktionseinheit (6) gehörende Verarbeitungseinheit verarbeitet wird, welche ein Antwortsignal generiert und die Funktionseinheit (6) zur Aussendung des Antwortsignals veranlasst.

5. Verfahren nach Anspruch 4, **dadurch gekennzeichnet, dass** das Prüfsignal Bestandteil zur Steuerung empfängerseitiger Einheiten oder Einrichtungen dienender von dem mindestens einen Sender ausgesendeter Steuersignale ist.

6. Optisches Übertragungssystem für ein Zugangsnetz zu einem Weitverkehrsnetz (7), mit
a) mindestens einem, mit wenigstens einem optischen Sender ausgestatteten Leitungsabschlussgerät, welches als OLT (1), nämlich Optical Line Termination, das Zugangsnetz netzseitig abschließt und an das Weitverkehrsnetz (7) anbindet,
b) mehreren, mit wenigstens einem optischen Empfänger ausgestatteten Netzabschlusseinrichtungen, welche als ONT (2, 2₁,...2ₙ), nämlich Optical Network Terminal, das Zugangsnetz teilnehmerseitig abschließen und
c) einer optischen Übertragungsstrecke (3) mit einem auf Fehler, nämlich auf Unterbrechungen eines Lichtwellenleiters überwachten Übertragungsabschnitt (4),
**dadurch gekennzeichnet, dass** der überwachte Übertragungsabschnitt (4) ein Übertragungsabschnitt (4) ist, an dessen teilnehmerseitigen Ende eine mehrere ONT (2, 2₁,....2ₙ) an diesen Übertragungsabschnitt (4) ankoppelnde Kopplungseinrichtung (5) angeordnet ist und dass die Kopplungseinrichtung (5) mit einer Funktionseinheit (6) ausgestattet ist, von welcher zu einem von einem Sender eines OLT (1) empfangenen Prüfsignal ein Antwortsignal an den vorgenannten oder an einen anderen OLT (1) übertragen wird, bei welchem dieses Antwortsignal durch eine mit einem optischen Empfänger ausgestattete Steuer- und Verarbeitungseinheit empfangen und ausgewertet wird, wobei durch diese Steuer- und Verarbeitungseinheit im Falle des Ausbleibens des Antwortsignals die Leistung des über den Übertragungsabschnitt (4) übertragenen optischen Signals durch Abschalten mindestens eines Senders des Übertragungssystems reduziert wird.

7. Optisches Übertragungssystem nach Anspruch 6, **dadurch gekennzeichnet, dass** die Kopplungseinrichtung (5) als ein WDM-Multiplexer/Demultiplexer, nämlich als ein nach dem Wellenlängenmultiplexverfahren arbeitender Multiplexer/Demultiplexer ausgebildet ist.

8. Optisches Übertragungssystem nach Anspruch 6 oder 7, **dadurch gekennzeichnet, dass** die Funktionseinheit (6) der Kopplungseinrichtung (5) als eine passive Funktionseinheit (6) ausgebildet ist, in welcher das Prüfsignal mit seiner gesamten Leistung oder einem Teil seiner Leistung reflektiert wird.

9. Optisches Übertragungssystem nach Anspruch 8, **dadurch gekennzeichnet, dass** die Funktionseinheit (6) der Kopplungseinrichtung (5) zur Auskopplung eines Teils der Leistung eines über die Kopplungseinrichtung (5) von einem Sender des OLT (1) zu einem Empfänger eines ONT (2, 2₁,....2ₙ) übertragenen Signals mit Nutzdaten ausgebildet ist.

10. Optisches Übertragungssystem nach einem der Ansprüche 6 bis 9, wobei dieses mehrere OLT (1, 1₁,....1ₙ) aufweist, **dadurch gekennzeichnet, dass** ein mit einer über einen optischen Empfänger verfügenden Steuer- und Verarbeitungseinheit ausgestatteter OLT (1) als Master arbeitet, durch welchen im Falle einer Unterbrechung des Wellenleiters in dem überwachten Übertragungsabschnitt (4) die optischen Sender aller OLT (1, 1₁,...1ₙ) des Systems angesteuert werden, so dass durch Abschaltung einzelner dieser optischen Sender die Leistung des über den Übertragungsabschnitt (4) übertragenen optischen Signals reduziert wird.

11. Optisches Übertragungssystem nach Anspruch 10, **dadurch gekennzeichnet, dass** der Übertragungsabschnitt (4) einen für die Signale der Sender mehrerer OLT (1, 1₁,...1ₙ) gemeinsam genutzten Teilabschnitt (4') aufweist.

## Claims

1. Method for automatically reacting to a fault in an optical transmission system, comprising at least one transmitter, at least one receiver and a transmission path (3), for an access network to a wide area network (7), according to which, in the event of an interruption in an optical waveguide in a monitored transmission section (4) of the transmission path (3), the power of the optical signal transmitted via the monitored transmission section (4) is at least automatically reduced, **characterized in that** the transmission path (3) is monitored in a transmission section (4), at the subscriber-side end of which a coupling device (5), which couples a plurality of ONTs (2, 2₁,...2ₙ) as subscriber-side network termination devices of the access network to the transmission section (4) and is equipped with a functional unit (6), is arranged, by virtue of at least one transmitter of a line termination device, which, as an OLT (1), namely an optical line termination, terminates the access network on the network side and connects it to the wide area network (7), repeatedly emitting a test signal and by virtue of a control and processing unit of an OLT (1), which is equipped with a receiver, receiving and evaluating a response signal emitted by the functional unit (6) of the coupling device (5) upon the reception of the test signal and, in the absence of the response signal, the power of the optical signal transmitted via the transmission section (4) being reduced by switching off at least one transmitter of the transmission system.

2. Method according to Claim 1, **characterized in that** the response signal is obtained from the test signal by virtue of all the power or some of the power of the test signal being reflected by the functional unit (6) of the coupling device (5) arranged at the subscriber-side end of the transmission section (4).

3. Method according to Claim 2, **characterized in that** a signal emitted by the at least one transmitter for the purpose of transmitting useful data to the at least one receiver is used as the test signal by virtue of some of the power of the signal carrying the useful data being coupled out in the functional unit (6) arranged at the subscriber-side end of the transmission section (4) and this power part being reflected by the functional unit (6).

4. Method according to Claim 1, **characterized in that** the test signal is received by a receiver of an active functional unit (6) and is processed by a processing unit which belongs to the functional unit (6) and generates a response signal and causes the functional unit (6) to emit the response signal.

5. Method according to Claim 4, **characterized in that** the test signal is part of control signals emitted by the at least one transmitter and used to control receiver-side units or devices.

6. Optical transmission system for an access network to a wide area network (7), having
a) at least one line termination device which is equipped with at least one optical transmitter and, as an OLT (1), namely an optical line termination, terminates the access network on the network side and connects it to the wide area network (7),
b) a plurality of network termination devices which are equipped with at least one optical receiver and, as ONTs (2, 2₁,...2ₙ), namely optical network terminals, terminate the access network on the subscriber side, and
c) an optical transmission path (3) having a transmission section (4) which is monitored for faults, namely for interruptions in an optical waveguide,
**characterized in that** the monitored transmission section (4) is a transmission section (4), at the subscriber-side end of which a coupling device (5), which couples a plurality of ONTs (2, 2₁,...2ₙ) to this transmission section (4), is arranged, and **in that** the coupling device (5) is equipped with a functional unit (6) which transmits a response signal to a test signal received from a transmitter of an OLT (1) to the above-mentioned OLT or to another OLT (1) in which this response signal is received and evaluated by a control and processing unit equipped with an optical receiver, this control and processing unit reducing the power of the optical signal transmitted via the transmission section (4) by switching off at least one transmitter of the transmission system in the absence of the response signal.

7. Optical transmission system according to Claim 6, **characterized in that** the coupling device (5) is in the form of a WDM multiplexer/demultiplexer, namely a multiplexer/demultiplexer operating according to the wavelength division multiplex method.

8. Optical transmission system according to Claim 6 or 7, **characterized in that** the functional unit (6) of the coupling device (5) is in the form of a passive functional unit (6) in which all of the power or some of the power of the test signal is reflected.

9. Optical transmission system according to Claim 8, **characterized in that** the functional unit (6) of the coupling device (5) is designed to couple out some of the power of a signal containing useful data which is transmitted from a transmitter of the OLT (1) to a receiver of an ONT (2, 2₁,...2ₙ) via the coupling device (5).

10. Optical transmission system according to one of Claims 6 to 9, wherein said system has a plurality of OLTs (1, 1₁,...1ₙ), **characterized in that** an OLT (1) equipped with a control and processing unit having an optical receiver operates as a master which, in the event of an interruption in the waveguide in the monitored transmission section (4), controls the optical transmitters of all OLTs (1, 1₁,...1ₙ) of the system such that the power of the optical system transmitted via the transmission section (4) is reduced by switching off individual transmitters of these optical transmitters.

11. Optical transmission system according to Claim 10, **characterized in that** the transmission section (4) has a section (4') jointly used for the signals from the transmitters of a plurality of OLTs (1, 1₁, ...1ₙ).

## Revendications

1. Procédé pour la réaction automatisée à un défaut dans un système de transmission optique constitué d'au moins un émetteur, d'au moins un récepteur et d'une voie de transmission (3) destinée à un réseau d'accès à un réseau étendu (7), selon lequel, en cas d'interruption d'une fibre optique dans une section de transmission (4) surveillée de la voie de transmission (3), la puissance du signal optique transmis par l'intermédiaire de la section de transmission (4) surveillée est au moins automatiquement réduite, **caractérisé en ce que** la voie de transmission (3) est surveillée dans une section de transmission (4) à l'extrémité côté abonné de laquelle est disposé un dispositif de couplage (5) couplant une pluralité d'ONT (2, 2₁, .... 2ₙ) en tant que dispositifs de terminaison du réseau d'accès côté abonné à la section de transmission (4) et équipés d'une unité fonctionnelle (6), en faisant en sorte qu'un signal de test soit émis de manière répétée par au moins un émetteur d'un dispositif de terminaison de ligne, qui termine le réseau d'accès côté réseau et le relie au réseau étendu (7) en tant qu'OLT (1), c'est-à-dire en tant que terminaison de ligne optique, et en faisant en sorte qu'un signal de réponse émis par l'unité fonctionnelle (6) du dispositif de couplage (5) soit reçu et exploité par une unité de commande et de traitement équipée d'un récepteur, d'un OLT (1), lors de la réception du signal de test et, en cas d'absence du signal de réponse, en réduisant la puissance du signal optique transmis par l'intermédiaire de la section de transmission (4) par désactivation d'au moins un émetteur du système de transmission.

2. Procédé selon la revendication 1, **caractérisé en ce que** le signal de réponse est obtenu à partir du signal de test en faisant en sorte que le signal de test soit réfléchi avec la totalité de sa puissance ou une partie de sa puissance par l'unité fonctionnelle (6) du dispositif de couplage (5) disposé à l'extrémité côté abonné de la section de transmission (4).

3. Procédé selon la revendication 2, **caractérisé en ce qu'**un signal émis en tant que signal de test par au moins un émetteur est utilisé pour transmettre des données utiles audit au moins un récepteur, en faisant en sorte qu'une partie de la puissance du signal transportant les données utiles soit découplée dans l'unité fonctionnelle (6) disposée à l'extrémité côté abonné de la section de transmission (4) et que ladite partie de la puissance soit réfléchie par l'unité fonctionnelle (6).

4. Procédé selon la revendication 1, **caractérisé en ce que** le signal de test est reçu par un récepteur d'une unité fonctionnelle (6) conçue pour être active et **en ce qu'**il est traité par une unité de traitement appartenant à l'unité fonctionnelle (6), qui génère un signal de réponse et provoque l'émission du signal de réponse par l'unité fonctionnelle (6).

5. Procédé selon la revendication 4, **caractérisé en ce que** le signal de test fait partie de signaux de commande servant à commander des unités ou des dispositifs côté récepteur et émis par ledit au moins un émetteur.

6. Système de transmission optique destiné à un réseau d'accès à un réseau étendu (7), comprenant
a) au moins un dispositif de terminaison de ligne équipé d'au moins un émetteur optique, qui termine le réseau d'accès côté réseau en tant qu'OLT (1), c'est-à-dire en tant que terminaison de ligne optique, et le relie au réseau étendu (7),
b) une pluralité de dispositifs de terminaison de réseau équipés d'au moins un récepteur optique, qui terminent le réseau d'accès côté abonné en tant qu'ONT (2, 2₁,... 2ₙ), c'est-à-dire en tant que terminal de réseau optique, et
c) une voie de transmission optique (3) comportant une section de transmission (4) surveillée pour détecter des erreurs, notamment des interruptions d'une fibre optique,
**caractérisé en ce que** la section de transmission (4) surveillée est une section de transmission (4) à l'extrémité côté abonné de laquelle est disposé un dispositif de couplage (5) couplant plusieurs ONT (2, 2₁, .... 2ₙ) à ladite section de transmission (4) et **en ce que** le dispositif de couplage (5) est équipé d'une unité fonctionnelle (6) par laquelle un signal de réponse est transmis audit OLT ou à un autre OLT (1) en réponse à un signal de test reçu d'un émetteur d'un OLT (1), lors de quoi ledit signal de réponse est reçu et évalué par une unité de commande et de traitement équipée d'un récepteur optique, dans lequel la puissance du signal optique transmis par l'intermédiaire de la section de transmission (4) est réduite par ladite unité de commande et de traitement, en cas d'absence du signal de réponse, par désactivation d'au moins un émetteur du système de transmission.

7. Système de transmission optique selon la revendication 6, **caractérisé en ce que** le dispositif de couplage (5) est réalisé sous la forme d'un multiplexeur/démultiplexeur WDM, c'est-à-dire d'un multiplexeur/démultiplexeur fonctionnant selon le procédé de multiplexage par répartition en longueur d'onde.

8. Système de transmission optique selon la revendication 6 ou 7, **caractérisé en ce que** l'unité fonctionnelle (6) du dispositif de couplage (5) est réalisée sous la forme d'une unité fonctionnelle (6) passive dans laquelle le signal de test est réfléchi avec la totalité de sa puissance ou une partie de sa puissance.

9. Système de transmission optique selon la revendication 8, **caractérisé en ce que** l'unité fonctionnelle (6) du dispositif de couplage (5) est réalisée de manière à découpler une partie de la puissance d'un signal comportant des données utiles transmis par l'intermédiaire du dispositif de couplage (5) d'un émetteur de l'OLT (1) à un récepteur d'un ONT (2, 2₁,... 2ₙ).

10. Système de transmission optique selon l'une quelconque des revendications 6 à 9, dans lequel celui-ci comporte une pluralité d'OLT (1, 1₁,... 1ₙ), **caractérisé en ce qu'**un OLT (1) équipé d'une unité de commande et de traitement possédant un récepteur optique fonctionne en tant que maître, au moyen duquel les émetteurs optiques de tous les OLT (1, 1₁,... 1ₙ) du système sont commandés, en cas d'interruption de la fibre optique dans la section de transmission (4) surveillée, de manière que la puissance du signal optique transmis par l'intermédiaire de la section de transmission (4) soit réduite par désactivation de certains desdits émetteurs optiques.

11. Système de transmission optique selon la revendication 10, **caractérisé en ce que** la section de transmission (4) comporte une sous-section (4') utilisée en commun pour les signaux des émetteurs d'une pluralité d'OLT (1, 1₁,... 1ₙ).
